# EUROPEAN PATENT APPLICATION

(11) **EP 4 678 906 A1**
(43) Date of publication of application: **14.01.2026**
(21) Application number: 25188698.2
(22) Date of filing: 10.07.2025
(51) Int. Cl.: F02M 21/02, F02M 37/00, B62D 55/06

(54) **HYDROGEN-POWERED CRAWLER VEHICLE AND CONTROL METHOD THEREOF**

(30) Priority: 11.07.2024 IT 202400016060
(71) Applicant: PRINOTH S.p.A., 39049 Vipiteno (BZ) (IT)
(72) Inventor: THOM, Jamie, 39049 VIPITENO (BZ) (IT)
(74) Representative: Studio Torta S.p.A.

(57) **Abstract**

A hydrogen-powered crawler vehicle (1) has a chassis (2); a reservoir (5) configured to hold pressurized hydrogen; a hydrogen-powered fuel-injected internal combustion engine (4) comprising a common rail to feed hydrogen to a plurality of injectors (41); a duct (7) to feed hydrogen from the reservoir (5) to the common rail (6); a catalytic combustion chamber (13) to burn hydrogen in flameless condition; an additional duct (14) to selectively connect the common rail (6) with said catalytic combustion chamber (13); and an exhaust duct (17) to evacuate the products of combustion from the catalytic combustion chamber (13).

## Description

### CROSS-REFERENCE TO RELATED APPLICATIONS

This patent application claims priority from Italian patent application no. 102024000016060 filed on July 11, 2024, the entire disclosure of which is incorporated herein by reference.

### TECHNICAL FIELD

The present invention relates to a hydrogen-powered crawler vehicle.

Specifically, a crawler vehicle comprising a chassis; a reservoir configured to hold pressurized hydrogen; a hydrogen-powered internal combustion engine comprising a plurality of injectors and a common rail to feed hydrogen to said injectors; and a duct to feed hydrogen from the reservoir to the common rail.

### STATE OF THE ART

The use of hydrogen as a fuel for internal combustion engines appears to be very attractive from the point of view of environmental sustainability because the reaction of hydrogen with oxygen produces water, specifically water vapor.

In general, the comburent is air that is composed of 78% nitrogen, therefore the products of combustion also include nitrogen oxides better known as Nox.

However, hydrogen-powered vehicles would be extremely more sustainable than current gasoline- and diesel-powered internal combustion engines also because the current Nox reduction technologies could find application in hydrogen-powered internal combustion engines.

These prospects make the use of hydrogen-powered internal combustion engines attractive in the field of crawler vehicles, such as snow groomers and crawler vehicles for vegetation management, which are used in pristine areas.

However, there are few vehicles provided with a hydrogen-powered internal combustion engine, and they are predominantly experimental vehicles.

The deployment of such vehicles is very limited for several orders of reasons: poor hydrogen production and distribution of refueling stations, and the high flammability of hydrogen, which requires the implementation of safety measures for the hydrogen reservoir and for the hydrogen distribution onboard the vehicle.

In fact, hydrogen is very light and volatile, it accumulates with difficulty and indeed tends to disperse easily. Therefore, in order to prevent hydrogen leakage, sealed tanks should be used to prevent the problem of progressive gas release into the environment.

Sealed tanks are relatively heavy, therefore they limit the use of hydrogen for motor vehicles, but additional weight would not represent a problem for crawler vehicles.

In any case, the problem of the inevitable release of hydrogen over time, resulting in flammable gas emission into the environment, will have to be taken into consideration when evaluating whether or not hydrogen vehicles can be parked in indoor garages in view of the fact that, when the engine is shut down, the ducts connecting the reservoir to the engine are filled with hydrogen.

### SUBJECT MATTER OF THE INVENTION

The object of the present invention is to manufacture a crawler vehicle that is free from the drawbacks of the prior art.

In accordance with the present invention a hydrogen-powered crawler vehicle is manufactured, the crawler vehicle comprising:
- a chassis;
- a reservoir configured to hold pressurized hydrogen;
- a hydrogen-powered fuel-injected internal combustion engine comprising a common rail to feed hydrogen to a plurality of injectors;
- a duct to feed hydrogen from the reservoir to the common rail;
- a catalytic combustion chamber to burn hydrogen in flameless condition;
- an additional duct to selectively connect the common rail with said catalytic combustion chamber; and
- an exhaust duct to evacuate the products of combustion from the catalytic combustion chamber.

In this manner, when the internal combustion engine is shut down, it is possible to evacuate the hydrogen mass leaked from the reservoir and in the common rail and to burn such hydrogen mass in flameless condition.

In this case, the crawler vehicle comprises a pressure-reducing valve arranged along said duct to reduce the pressure and selectively interrupt the flow of hydrogen along the duct.

Notoriously, the hydrogen reservoir comprises tanks to store hydrogen at a pressure of up to 700 bar. Therefore, it is necessary to reduce the pressure to 50/60 bar so that the injectors are fed at the correct operating pressure thereof.

It is also necessary to interrupt the hydrogen feeding when the internal combustion engine is not in use to prevent evaporation of hydrogen into the environment.

The crawler vehicle comprises a modulating shut-off valve arranged along the additional duct to selectively interrupt the flow of hydrogen from the common rail to the catalytic combustion chamber. In practice, the modulating shut-off valve is opened for a short period of time in order to allow the pressure in the common rail to decrease to a defined level to protect the injectors against pressure damage during prolonged periods of inactivity. The valve is closed as soon as a pressure threshold value is reached so as not to allow the air to flow into the common rail.

When the internal combustion engine is on, the modulating shut-off valve is closed, when the internal combustion engine is shut down, the modulating shut-off valve is opened so as to let the hydrogen flow out and feed the catalytic combustion chamber until the complete evacuation of the residual hydrogen mass.

In order to detect the duration of the complete evacuation of the residual hydrogen mass present in the duct and in the common rail after the internal combustion engine is shut down, the crawler vehicle comprises a sensor arranged along the exhaust duct configured to output a signal related to the presence and/or transit of the products of combustion along the exhaust duct.

In accordance with an embodiment of the present invention, the catalytic combustion chamber can be selectively heated and is made of platinum oxide coated titanium.

Specifically, the feeding and the evacuation of the residual hydrogen mass are managed by a control unit provided with a user interface and configured to control the internal combustion engine and the hydrogen feeding to the internal combustion engine and to the catalytic combustion chamber as a function of the operation of the internal combustion engine.

The control unit is configured to calculate an additional signal according to said signal to indicate on the user interface the possibility of arranging the crawler vehicle in an enclosed environment or to exclude the possibility of arranging the crawler vehicle in an enclosed environment. In practice, the signal acquired by the sensor is compared with a threshold value to ascertain whether the hydrogen mass evacuation operations have been completed.

A further object of the present invention is to provide a control method for controlling a hydrogen-powered crawler vehicle, the method being able to overcome the drawbacks of the prior art.

In accordance with the present invention a control method for controlling a hydrogen-powered crawler vehicle is provided, the method comprising:
- selectively feeding hydrogen from a reservoir to a common rail of a hydrogen-powered fuel-injected internal combustion engine when the internal combustion engine is on;
- feeding hydrogen from the common rail (6) to a plurality of injectors of the internal combustion engine (4);
- interrupting the hydrogen feeding to the common rail when the internal combustion engine is shut down;

- selectively feeding hydrogen from the common rail to a catalytic combustion chamber to burn hydrogen in flameless condition after shutting down the internal combustion engine; and
- evacuating the products of combustion from the catalytic combustion chamber along an exhaust duct.

In this manner, hazards related to the residual hydrogen mass leaked from the reservoir are reduced.

The control method involves acquiring a signal related to the presence or transit of products of combustion along the exhaust duct so as to ascertain that the evacuation of the residual hydrogen mass is finished and to calculate an additional signal according to said signal and to indicate the possibility of arranging the crawler vehicle in an enclosed environment or to exclude the possibility of arranging the crawler vehicle in an enclosed environment.

### BRIEF DESCRIPTION OF THE FIGURES

Further characteristics and advantages of the present invention will appear clear from the following description of a non-limiting example of the present invention, with reference to the accompanying Figure, which is a schematic view, with parts removed for clarity, of a crawler vehicle manufactured in accordance with the present invention.

### PREFERRED EMBODIMENT OF THE INVENTION

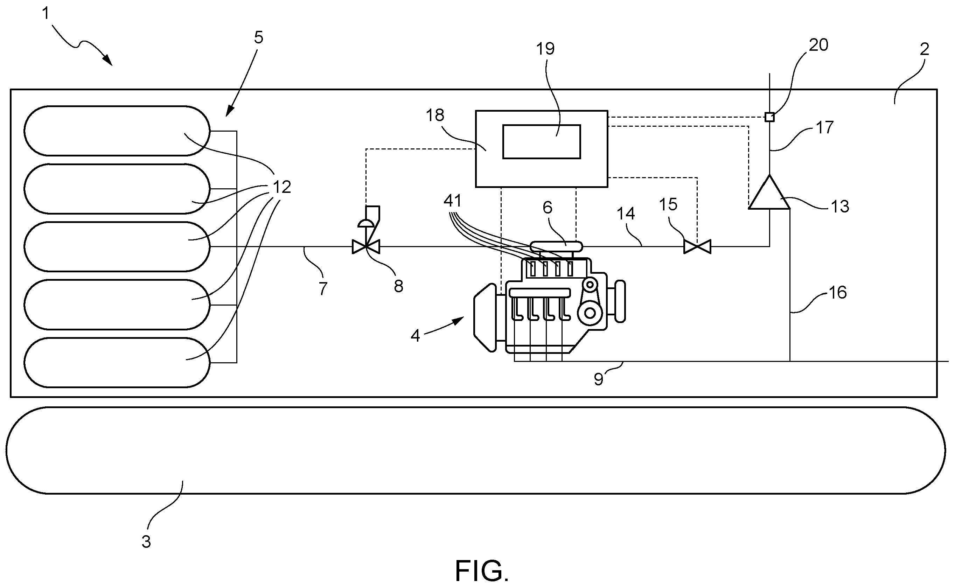

With reference to the accompanying Figure, reference numeral 1 indicates, as a whole, a crawler vehicle. The crawler vehicle 1 comprises a chassis 2; two tracks 3, only one of which is schematized in Figure 1; a fuel-injected internal combustion engine 4 to power the tracks 3; and a reservoir 5 configured to hold hydrogen. The internal combustion engine 4, which in the case illustrated is a four-cylinder engine, is hydrogen-powered.

The internal combustion engine 4 comprises a plurality of injectors 41 fed by a common rail 6 in which hydrogen is at a pressure between 50 and 60 bar.

The common rail 6 is connected to the reservoir 5 via a duct 7, along which a controlled pressure reducer 8 is arranged.

The internal combustion engine 4 further comprises a feeding line 9 to feed air to each of the cylinders.

The reservoir 5 comprises a series of tanks 12 structured to hold hydrogen at a pressure of 700 bar connected in parallel to the duct 7.

The crawler vehicle 1 comprises a catalytic combustion chamber 13 to burn hydrogen in flameless condition. The catalytic combustion chamber 13 is supported by the chassis 2 and is connected to the common rail 6 via a duct 14 along which a modulating shut-off valve 15 is arranged. The catalytic combustion chamber 13 is connected to a feeding line 16 to feed air at ambient pressure to the catalytic combustion chamber 13 and an exhaust duct 17 to evacuate the products of combustion.

The crawler vehicle 1 comprises a control unit 18 provided with a user interface 19 and is configured to control the injectors 41, the pressure-reducing valve 8, the catalytic combustion chamber 13, and the modulating shut-off valve 15.

In use, when the internal combustion engine 4 is shut down, the pressure-reducing valve 8 is closed so as to prevent hydrogen from leaking from the reservoir 5, while the modulating shut-off valve 15 is open.

When the internal combustion engine 4 is started, the modulating shut-off valve 15 is closed while the pressure-reducing valve is opened so as to feed the common rail 6 and in cascade the injectors 41 with hydrogen at a pressure of about 60 bar.

Hydrogen and the oxygen contained in the air react in the combustion reaction and release energy that the internal combustion engine 4 converts into mechanical energy.

When the internal combustion engine 4 is stopped via the user interface 19, the pressure-reducing valve 8 is closed, and the catalytic combustion chamber 13 is activated. Thereafter, the modulating shut-off valve 15 is opened to release the residual hydrogen present in the duct 7 and in the common rail 6. Hydrogen is fed to the catalytic combustion chamber 13 where it combines with air at ambient pressure to produce a flameless combustion reaction.

The catalytic combustion chamber 13 is activated by an electrical resistor, not illustrated, and the preferred material for catalyzing the flameless combustion reaction is platinum oxide coated titanium.

The products of the flameless combustion are discharged to the atmosphere through the exhaust duct 17.

When combustion is finished, the control unit 18 outputs a signal displayed on the user interface 19 showing that the process has been accomplished and the crawler vehicle 1 can be arranged in an enclosed space.

In order to detect the end of the flameless combustion process, a sensor 20 arranged along the exhaust duct 17 detects a parameter, such as temperature or pressure, related to the transit of hot fumes and compares it with a reference parameter

It is evident that variations can be made to the present invention without, however, departing from the scope of protection of the appended claims.

## Claims

1. A hydrogen-powered crawler vehicle, the crawler vehicle (1) comprising:
- a chassis (2);
- a reservoir (5) configured to hold pressurized hydrogen;
- a hydrogen-powered fuel-injected internal combustion engine (4) comprising a common rail to feed hydrogen to a plurality of injectors (41);
- a duct (7) to feed hydrogen from the reservoir (5) to the common rail (6);
- a catalytic combustion chamber (13) to burn hydrogen in flameless condition;
- an additional duct (14) to selectively connect the common rail (6) with said catalytic combustion chamber (13); and
- an exhaust duct (17) to evacuate the products of combustion from the catalytic combustion chamber (13).

2. The crawler vehicle as claimed in claim 1 and comprising a pressure-reducing valve arranged along said duct (7) to reduce pressure and selectively interrupt the flow of hydrogen along the duct (8).

3. The crawler vehicle as claimed in claim 1 or 2 and comprising a modulating shut-off valve (15) arranged along the additional duct to selectively interrupt the flow of hydrogen from the common rail (6) to the catalytic combustion chamber (13).

4. The crawler vehicle as claimed in any one of the preceding claims and comprising a sensor (20) arranged along the exhaust duct (17) configured to output a signal related to the presence and/or transit of the products of combustion along the exhaust duct (17).

5. The crawler vehicle as claimed in any one of the preceding claims, wherein the catalytic combustion chamber (13) can be selectively heated and is made of platinum oxide coated titanium.

6. The crawler vehicle as claimed in any one of the preceding claims and comprising a control unit (18) provided with a user interface (19) and configured to control the internal combustion engine (4) and the hydrogen feeding to the internal combustion engine (4) and to the catalytic combustion chamber as a function of the operation of the internal combustion engine (4).

7. The crawler vehicle as claimed in claim 4 and 6, wherein the control unit (18) is configured to calculate an additional signal according to said signal to indicate the possibility of arranging the crawler vehicle (1) in an enclosed environment or to exclude the possibility of arranging the crawler vehicle (1) in an enclosed environment.

8. A control method for controlling a hydrogen-powered crawler vehicle, the method comprising:
- selectively feeding hydrogen from a reservoir (5) to a common rail (6) of a hydrogen-powered fuel-injected internal combustion engine (4) when the internal combustion engine (4) is on;
- feeding hydrogen from the common rail (6) to a plurality of injectors (41) of the internal combustion engine (4);
- interrupting the hydrogen feeding to the common rail (6) when the internal combustion engine (4) is shut down;
- selectively feeding hydrogen from the common rail (6) to a catalytic combustion chamber (13) to burn hydrogen in flameless condition after shutting down the internal combustion engine (4); and
- evacuating the products of combustion from the catalytic combustion chamber (13) along an exhaust duct (17).

9. The control method as claimed in claim 8 and comprising acquiring a signal related to the presence or transit of products of combustion along the exhaust duct (17).

10. The control method as claimed in claim 9 and comprising calculating an additional signal according to said signal and to indicate the possibility of arranging the crawler vehicle (1) in an enclosed environment or to exclude the possibility of arranging the crawler vehicle (1) in an enclosed environment.
